# EUROPÄISCHE PATENTANMELDUNG

(11) **EP 4 516 171 A1**
(43) Veröffentlichungstag der Anmeldung: **05.03.2025**
(21) Anmeldenummer: 24188548.2
(22) Anmeldetag: 15.07.2024
(51) Int. Cl.: A47J 31/60, A47J 31/52

(54) **VERFAHREN ZUM BETREIBEN EINES KAFFEEAUTOMATEN**

(30) Priorität: 29.08.2023 DE 102023208276
(71) Anmelder: BSH Hausgeräte GmbH, 81739 München (DE)
(72) Erfinder: Thies, Manuel, 84574 Taufkirchen (DE); Reichel, Thomas, 83278 Traunstein (DE)

(57) **Zusammenfassung**

Die vorliegende Erfindung betrifft ein Verfahren zum Betreiben eines Kaffeeautomaten (1), bei dem
- Kaffeegetränkewünsche eines Benutzers bei der Benutzung des Kaffeeautomaten (1) sowie hierfür hinterlegte oder vom Benutzer vorgenommenen Einstellungen erfasst und an eine Rechnereinrichtung (2) übermittelt werden,
- die Rechnereinrichtung (2) die Kaffeegetränkewünsche und die hierfür hinterlegten oder vom Benutzer vorgenommenen Einstellungen analysiert und daraus mit den Kaffeegetränkewünschen und hinterlegten oder vom Benutzer vorgenommenen Einstellungen korrespondierende Kaffeeeigenschaften ermittelt,
- die Rechnereinrichtung (2) die ermittelten Kaffeeeigenschaften mit für unterschiedliche Kaffeesorten hinterlegten Kaffeeeigenschaften vergleicht,
- die Rechnereinrichtung (2) eine Kaffeesorte auswählt, bei welcher die ermittelten Kaffeeeigenschaften und die hinterlegten Kaffeeeigenschaften eine größtmögliche Übereinstimmung aufweisen,
- die Rechnereinrichtung (2) dem Nutzer bei einem nachfolgenden Getränkewunsch die für diesen Getränkewunsch ausgewählte Kaffeesorte vorschlägt.

## Beschreibung

Die vorliegende Erfindung betrifft ein Verfahren zum Betreiben eines Kaffeeautomaten. Die Erfindung betrifft außerdem einen Kaffeeautomaten mit einem Display bzw. einer Eingabeeinrichtung zum Eingeben von Kaffeegetränkewünschen und/oder zum Vornehmen von Einstellungen und einer Rechnereinrichtung zur Durchführung des Verfahrens. Die Erfindung betrifft weiterhin ein Computerprogrammprodukt, umfassend Befehle, welche bei Ausführung des Computerprogrammprodukts durch einen Kaffeeautomaten diesen veranlassen, das Verfahren auszuführen.

Aus der EP 4 123 998 A1 ist ein Verfahren zur automatischen Konfiguration eines elektrischen Gerätes bekannt, aufweisend zumindest folgende Verfahrensschritte: Ableiten von Gewohnheiten eines Benutzers jeweils bei der Benutzung des elektrischen Gerätes auf Basis einer Dateneingabe, Schätzen einer Konfiguration für eine zukünftige Benutzung und automatische Konfiguration des elektrischen Geräts anhand der Schätzung zur zukünftigen Benutzung, wobei die automatische Konfiguration ein Anzeigen eines Benutzerprofils und/oder eines in dem elektrischen Gerät hinterlegten Programms zur Durchführung eines Prozesses zum Betreiben des elektrischen Gerätes und gegebenenfalls eines oder mehrerer im elektrischen Gerät hinterlegter Programmparameter aufweist. Hierdurch soll ein Verfahren zur automatischen Konfiguration eines elektrischen Gerätes geschaffen werden, welches sich an den Benutzer anpasst, ohne dass der Benutzer hierfür technische Hilfsmittel zu seiner Identifizierung benötigt.

Kaffeeautomaten finden zunehmend auch im Consumerbereich Verbreitung, wobei üblicherweise einem Benutzer für eine bestimmte Kaffeebohnenmarke bzw. eine bestimmte Kaffeebohnensorte gezielt die hierfür optimalen Einstellungen für unterschiedliche Kaffeegetränke vorgeschlagen und ggf. sogar automatisch vorgenommen werden. Grundlage hierfür ist eine Datenbank mit darin aufgeführten Kaffeesorten sowie zugehörigen Getränkeparametern. Beispielsweise stellt der Kaffeeautomat für die ausgewählte Kaffeesorte einen hierfür optimalen Mahlgrad, eine Brühtemperatur, eine Stärke sowie eine Intensität für einen Espresso ein und erlaubt dem Benutzer so eine vergleichsweise schnelle Wahl der optimalen Parameter.

Nachteilig bei den aus dem Stand der Technik bekannten Verfahren ist jedoch, dass ein Benutzer äußerst vertiefte Kenntnisse haben muss, sofern er die bezüglich einer Kaffeesorte optimalen Einstellungen selbst ermitteln möchte. Von besonderer Schwierigkeit ist darüber hinaus, dass der Benutzer üblicherweise lediglich die für die jeweils benutzte Kaffeebohnensorte bzw. generell Kaffeesorte zugehörigen Getränkeparameter/Einstellungen angezeigt bekommt bzw. diese bereits von dem Kaffeeautomaten selbst eingestellt werden. Möchte der Benutzer jedoch seine bevorzugten Kaffeegetränke durch die Verwendung neuer Kaffeesorten optimieren, so wird ihm diesbezüglich keinerlei Hilfe angeboten.

Die vorliegende Erfindung beschäftigt sich daher mit dem Problem, ein Verfahren anzugeben, mittels welchem einem Benutzer für seine präferierten Kaffeegetränke Optimierungsmöglichkeiten angeboten werden.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals im Vergleich zum Stand der Technik einen völlig anderen Weg bei der Optimierung von Kaffeegetränken zu gehen und dabei zunächst die seitens eines Benutzers präferierten Kaffeegetränke bzw. Kaffeegetränkewünsche und die hiermit korrespondierenden Einstellungen zu erfassen und anhand dieser eine hierfür optimale Kaffeesorte auszuwählen und dem Benutzer vorzuschlagen. Konkret bedeutet dies, dass, sofern der Benutzer beispielsweise mehrfach hintereinander einen Espresso als Getränkewunsch in einen Kaffeeautomaten eingibt, dieser eine diesen Espressowunsch am ehesten befriedigende Kaffeesorte ermittelt und für die Zubereitung weiterer Espressi dem Benutzer vorschlägt. Bei dem erfindungsgemäßen Verfahren zum Betreiben eines Kaffeeautomaten werden somit zunächst Kaffeegetränkewünsche und hierfür hinterlegte oder vom Benutzer vorgenommenen Einstellungen des Benutzers bei der Benutzung des Kaffeeautomaten erfasst und an eine Rechnereinrichtung übermittelt. Das Erfassen eines derartigen Getränkewunsches sowie der damit korrespondierenden und hierfür hinterlegten oder vom Benutzer vorgenommenen Einstellungen kann beispielsweise über eine entsprechende Eingabeeinrichtung bzw. ein Display an dem Kaffeeautomaten erfolgen, über welches der Benutzer seinen Kaffeewunsch eingibt. Anschließend analysiert die Rechnereinrichtung die Kaffeegetränkewünsche und die hierfür hinterlegten oder vom Benutzer vorgenommenen Einstellungen und ermittelt daraus mit den Kaffeegetränkewünschen und hinterlegten oder vom Benutzer vorgenommenen Einstellungen korrespondierende Kaffeeeigenschaften. Derartige Kaffeeeigenschaften sind beispielsweise eine Intensität, eine Getränkemenge, ein Koffeingehalt, etc. Wiederum anschließend vergleicht die Rechnereinrichtung die ermittelten Kaffeeeigenschaften mit für unterschiedliche Kaffeesorten hinterlegten Kaffeeeigenschaften. Die unterschiedlichen Kaffeesorten mit den jeweils zugehörigen Kaffeeeigenschaften können dabei beispielsweise in Kennfeldern bzw. Tabellen in einer Speichereinrichtung der Rechnereinrichtung hinterlegt und so von der Rechnereinrichtung verwendet werden. Besitzt die Rechnereinrichtung beispielsweise ein WLAN-Modul, so ist auch eine ständige, insbesondere automatische, Aktualisierung dieser Kennfelder bzw. Tabellen mit weiteren Kaffeesorten problemlos möglich, wodurch einem Benutzer auch Zugriff auf neue Kaffeesorten gewährt werden kann. Nach dem Vergleich der ermittelten Kaffeeeigenschaften mit den für unterschiedliche Kaffeesorten hinterlegten Kaffeeeigenschaften, wählt die Rechnereinrichtung eine Kaffeesorte aus, bei welcher die ermittelten Kaffeeeigenschaften und die hinterlegten Kaffeeeigenschaften eine größtmögliche Übereinstimmung aufweisen. Auch hier können beispielsweise wieder eine Intensität bzw. ein Koffeingehalt der jeweiligen Kaffeesorten verglichen werden. Anschließend schlägt die Rechnereinrichtung dem Benutzer bei einem nachfolgenden Getränkewunsch die für diesen Getränkewunsch ausgewählte Kaffeesorte vor. Wählt beispielsweise der Benutzer an dem Kaffeeautomaten üblicherweise oder zumindest mehrfach einen Espresso, so kann die Rechnereinrichtung eine ein solches Espresso-Geschmacksempfinden am ehest befriedigende Kaffeesorte auswählen und vorschlagen. Verändert dabei beispielsweise der Benutzer bei der Auswahl des Espresso zusätzlich noch die Menge an Kaffeemehl, um einen kräftigeren Geschmack, d. h. eine höhere Intensität, zu erhalten, so kann die Rechnereinrichtung in diesem Fall eine Kaffeesorte auswählen und anbieten, die sowohl für einen Espresso geeignet als auch eine höhere bzw. hohe Intensität aufweist. In gleicher Weise können selbstverständlich auch Kaffeeeigenschaften für einen Cappuccino oder einen Milchkaffee berücksichtigt werden. Einem Benutzer wird somit bei dem erfindungsgemäßen Verfahren erstmals anhand von eingegebenen Kaffeegetränkewünschen bzw. hierfür hinterlegten bzw. vorgenommenen Einstellungen eine zugehörige und das Geschmacksempfinden des Benutzers am ehesten befriedigende Kaffeesorte angeboten. Hierdurch lässt sich ein Komfort für einen Benutzer deutlich steigern, da dies bislang so in keiner Weise möglich war.

Bei einer vorteilhaften Weiterbildung des erfindungsgemäßen Verfahrens empfiehlt die Rechnereinrichtung für die ausgewählte und vorgeschlagene Kaffeesorte eine Verkaufsstelle. Neben der Information, welche Kaffeesorte die Bedürfnisse des Benutzers am ehesten befriedigt, kann somit das erfindungsgemäße Verfahren dem Benutzer zusätzlich eine mögliche Verkaufsstelle angeben, in welcher er die ausgewählte und vorgeschlagene Kaffeesorte kaufen kann. Dies stellt eine weitere erhebliche Komfortsteigerung für den Benutzer dar, da dieser nicht zunächst im Internet suchen muss, wo er die seine Geschmacksbedürfnisse am ehest befriedigende Kaffeesorte kaufen kann.

Bei einer besonders bevorzugten Ausführungsform legt der Benutzer einen Radius um den Kaffeeautomaten und/oder bestimmte Regionen oder Städte fest, in welchem bzw. in welchen die Verkaufsstelle für die ausgewählte und vorgeschlagene Kaffeesorte liegen soll. Hierdurch ist es beispielsweise möglich, dass der Benutzer eine lediglich fußläufig zu erreichende Distanz in den Kaffeeautomaten eingibt, wodurch die Rechnereinrichtung ihm auch lediglich Verkaufsstellen für die ausgewählte und vorgeschlagene Kaffeesorte anbietet, die in dieser fußläufigen Distanz liegen. Hierdurch können insbesondere eine Regionalität gefördert und ein Umweltgedanke berücksichtigt werden. Rein theoretisch können selbstverständlich auch einzelne Verkaufsstellen festgelegt werden, beispielsweise Fair-Trade-Läden, sodass auch ein Nachhaltigkeitsgedanke berücksichtigt werden kann.

Zusätzlich oder alternativ kann bei einer besonders bevorzugten Ausführungsform des erfindungsgemäßen Verfahrens die Rechnereinrichtung dem Benutzer über ein WLAN-Modul für die ausgewählte und vorgeschlagene Kaffeesorte auch einen online Shop empfehlen. Hierbei ist es insbesondere denkbar, dass dem Benutzer über eine entsprechende app direkt ein Shop vorgeschlagen wird, in welchem er die seine Geschmacksbedürfnisse am ehesten befriedigende Kaffeesorte kaufen bzw. beziehen kann.

Bei einer besonders bevorzugten Ausführungsform des Verfahrens werden von der Rechnereinrichtung zumindest eine der nachfolgenden Kaffeeeigenschaften verarbeitet: Röstgrad, Säuregehalt, Anbaugebiet, Preis, Nachhaltigkeit, Koffeingehalt, Ölgehalt, etc. Bereits diese nicht abschließende Aufzählung lässt erahnen, welch mannigfaltige Auswahlmöglichkeiten an unterschiedlichen Kaffeeeigenschaften der Rechnereinrichtung zur Verfügung gestellt werden können und dadurch dem Benutzer ein deutlich verbessertes Geschmacksempfinden ermöglichen. Die genannten Parameter finden dabei sowhl bei den ermittelten Kaffeeeigenschaften als auch bei den hinterlegten Kaffeeeigenschaften Verwendung.

Die vorliegende Erfindung beruht weiter auf dem allgemeinen Gedanken, einen Kaffeeautomaten mit einer Eingabeeinrichtung bzw. einem Display zum Eingeben eines Getränkewunsches und/oder zum Vornehmen von Einstellungen und einer Rechnereinrichtung zur Durchführung des in den vorherigen Absätzen beschriebenen Verfahrens anzugeben. Mit dem erfindungsgemäßen Kaffeeautomaten ist es somit erstmals möglich, auch ungeübten Benutzern eine ihre Geschmacksbedürfnisse am ehesten befriedigende Kaffeesorte für jeweilige Kaffeegetränkewünsche anzugeben, wodurch dem Benutzer erstmals eine völlig neue Auswahlmöglichkeit gegeben wird. Zudem ermöglicht der erfindungsgemäße Kaffeeautomat dem Benutzer auch Nischenprodukte, d. h. eher weniger bekannte Kaffeesorten, anzubieten, die jedoch seine Geschmacksbedürfnisse unter Umständen eher befriedigen als gängige Topseller.

Bei einer vorteilhaften Ausführungsform des erfindungsgemäßen Kaffeeautomaten weist dieser ein mit der Rechnereinrichtung kommunizierend verbundenes WLAN-Modul auf. Über ein derartiges WLAN-Modul ist es dem Kaffeeautomaten möglich, sowohl Listen mit Kaffeesorten und darin hinterlegten Kaffeeeigenschaften aktuell zu halten als auch ausgewählte Kaffeesorten dem Benutzer direkt online, beispielsweise über einen Link zu einem entsprechenden Shop, anzubieten. Über ein derartiges WLAN-Modul ist selbstverständlich auch eine Bedienung des Kaffeeautomaten aus der Ferne problemlos möglich.

Die vorliegende Erfindung beruht weiter auf dem allgemeinen Gedanken, ein Computerprogrammprodukt anzugeben, welches Befehle umfasst, die bei Ausführung des Computerprogrammprodukts durch einen Kaffeeautomaten bzw. eine Rechnereinrichtung desselben dieses veranlassen, das in den vorherigen Absätzen beschriebene Verfahren durchzuführen. Das Verfahren wird somit vorzugsweise mittels eines entsprechend ausgestalteten Computerprogrammprodukts ausgeführt, welches auf einem nicht flüchtigen Datenspeicher, insbesondere einer Speichereinrichtung hinterlegt, insbesondere gespeichert, ist. Das Computerprogrammprodukt ist dabei vorteilhafter Weise in einem Teil der Rechnereinrichtung bzw. dem Kaffeeautomaten gespeichert. Es versteht sich, dass auch das Computerprogrammprodukt als solches zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: ein erfindungsgemäßes Verfahren zum Betreiben eines Kaffeeautomaten mit seinen Verfahrensschritten,
- Figur 2: einen erfindungsgemäßen Kaffeeautomaten mit einer Rechnereinrichtung zur Durchführung des erfindungsgemäßen Verfahrens.

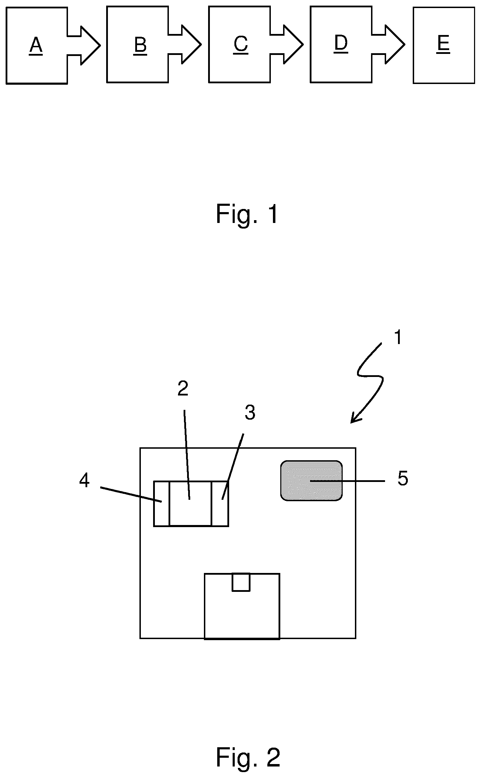

Entsprechend der Figur 1 weist ein erfindungsgemäßes Verfahren zum Betreiben eines Kaffeeautomaten 1 (vergleiche Figur 2) zumindest fünf Verfahrensschritte A bis E auf. In einem ersten Verfahrensschritt A werden zunächst ein Kaffeegetränkewunsch sowie hierfür hinterlegte oder von einem Benutzer vorgenommene Einstellungen bei der Benutzung des Kaffeeautomaten 1 erfasst und an eine Rechnereinrichtung 2 des Kaffeeautomaten 1 übermittelt. Selbstverständlich können dabei auch mehrere Kaffeegetränkewünsche des Benutzers erfasst und an die Rechnereinrichtung 2 übermittelt werden. Im Verfahrensschritte B analysiert die Rechnereinrichtung 2 die erfassten Kaffeegetränkewünsche bzw. die hinterlegten oder vom Benutzer vorgenommenen Einstellungen und ermittelt daraus mit den Kaffeegetränkewünschen und hinterlegten oder vom Benutzer vorgenommenen Einstellungen korrespondierende Kaffeeeigenschaften. Im Verfahrensschritt C vergleicht nun die Rechnereinrichtung 2 die Kaffeeeigenschaften mit für unterschiedliche Kaffeesorten hinterlegten Kaffeeeigenschaften, wobei diese unterschiedlichen Kaffeeeigenschaften der jeweiligen Kaffeesorten, beispielsweise in einem nichtflüchtigen Speicher 3 im Kaffeeautomaten 1 abgespeichert sind. Alternativ ist selbstverständlich auch denkbar, dass diese Kaffeesorten mit den jeweils zugehörigen Kaffeeeigenschaften in einer Cloud hinterlegt sind, zu welcher die Rechnereinrichtung 2 beispielsweise über ein WLAN-Modul 4 Zugang hat. Im Verfahrensschritt D wählt nun die Rechnereinrichtung 2 eine Kaffeesorte aus, bei welcher die hinterlegten Kaffeeeigenschaften und die zu den jeweiligen Kaffeegetränkewünschen ermittelten Kaffeeeigenschaften die größtmögliche Übereinstimmung aufweisen. Im Verfahrensschritte E schlägt nun die Rechnereinrichtung 2 dem Benutzer bei einem nachfolgenden Getränkewunsch die für diesen Getränkewunsch ausgewählte Kaffeesorte vor. Hierdurch ist es erstmals möglich, einem Benutzer anhand von geäußerten Kaffeegetränkewünschen eine hierfür optimale Kaffeesorte mit jeweils optimalen Kaffeeeigenschaften anzubieten. Dies war bislang nicht möglich, da dem Benutzer lediglich die Kaffeeeigenschaften der Kaffeesorten bekannt gegeben wurden und dieser dann die einzelnen Kaffeesorten ausprobieren konnte, bis er die seine Geschmacksbedürfnisse am ehesten befriedigende Kaffeesorte entdecken konnte. Mit dem erfindungsgemäßen Verfahren wird nun die Herangehensweise erstmals komplett umgekrempelt, da die Rechnereinrichtung 2 des Kaffeeautomaten 1 zunächst erfasst, welche individuellen Kaffeegetränkewünsche der jeweilige Benutzer hat bzw. welche Einstellungen er hierzu vornimmt. Diesen individuellen Kaffeegetränkewünschen bzw. Einstellungen sind korrespondierende Kaffeeeigenschaften zugeordnet, beispielsweise bei einem Wunsch nach einem Espresso kann die Rechnereinrichtung 2 Kaffeeeigenschaften wie beispielsweise eine geringe Getränkemenge sowie eine höhere Intensität und einen stärkeren Röstgrad einer Kaffeesorte zuordnen. Durch den Vergleich der anhand der Kaffeegetränkewünsche ermittelten Kaffeeeigenschaften und den Kaffeeeigenschaften der hinterlegten Kaffeesorten ist es nun möglich, diejenige Kaffeesorte auszuwählen und dem Benutzer anzubieten, die seine Geschmacksbedürfnisse am ehesten befriedigt und dadurch ein besonders hohes Geschmackserlebnis erzeugt. Mit dem erfindungsgemäßen Verfahren lässt sich so eine erhebliche Komfortsteigerung für einen Benutzer des Kaffeeautomaten 1 erreichen.

Eingegeben werden der Getränkewunsch bzw. die Einstellungen in den Kaffeeautomaten 1 durch den Benutzer beispielsweise über ein Display 5, über welches auch die ausgewählte und vorgeschlagene Kaffeesorte dem Benutzer angezeigt werden kann. Über das Display 5, das als Eingabeeinrichtung ausgebildet ist, können auch Einstellungen vorgenommen werden, beispielsweise ein Mahlgrad, eine Kaffeemenge, eine Wassermenge, eine Brühtemperatur, etc.

Bei einer Weiterbildung des erfindungsgemäßen Verfahrens empfiehlt die Rechnereinrichtung 2 für die ausgewählte und vorgeschlagene Kaffeesorte eine Verkaufsstelle. Hierdurch kann eine weitere Komfortsteigerung für den Benutzer erreicht werden, da diesem nicht nur die seine Geschmacksbedürfnisse am ehesten befriedigende Kaffeesorte angeboten wird, sondern zugleich auch ein Ort, an welchem der Benutzer diese Kaffeesorte beziehen bzw. kaufen kann.

Dabei ist es sogar möglich, dass die Rechnereinrichtung 2 dem Benutzer über das WLAN-Modul 4 für die ausgewählte und vorgeschlagene Kaffeesorte eine online-Verkaufsstelle, d. h. einen online Shop, empfiehlt bzw. dem Benutzer einen entsprechenden Link zu diesem online Shop schickt. Rein theoretisch ist es sogar vorstellbar, dass die Rechnereinrichtung 2 bereits einen vordefinierte Kriterien erfüllenden online Shop ermittelt und der Benutzer dem Kauf nur noch über einen entsprechenden Button zustimmen muss. Die vordefinierten Kriterien können dabei beispielsweise örtliche Nähe, fair trade, Preis, etc. sein.

Bei einer weiteren vorteilhaften Ausführungsform des erfindungsgemäßen Verfahrens legt der Nutzer einen Radius um den Kaffeeautomaten und/oder bestimmte Regionen oder Städte fest, in welchem/welchen die Verkaufsstelle für die ausgewählte und vorgeschlagene Kaffeesorte liegen soll. Hierdurch ist es möglich, regionale Verkaufsstellen zu bevorzugen, wodurch Transportwege minimiert und ein umweltbewusstes Einkaufen gefördert werden kann. Außerdem ist es denkbar, dass der Nutzer den Radius, in welchem die Verkaufsstelle liegen soll, so auswählt, dass er die Verkaufsstelle entweder fußläufig oder per Rad und damit äußerst umweltbewusst erreichen kann.

Bei einer besonders bevorzugten Ausführungsform des Verfahrens verarbeitet die Rechnereinrichtung 2 zumindest einen der folgenden aufgrund der erfassten Kaffeegetränkewünsche ermittelten Kaffeeeigenschaften: Röstgrad, Säuregehalt, Anbaugebiet, Preis, Nachhaltigkeit, Koffeingehalt, Ölgehalt, etc. Wählt somit der Benutzer beispielsweise mehrfach hintereinander einen Espresso aus und stellt hierbei die benutzte Kaffeemenge höher ein, so kann die Rechnereinrichtung 2 hieraus ermitteln, dass die für den Benutzer am ehesten geeignete Kaffeesorte Espressobohnen mit einer höheren Intensität sind. Bereits diese nicht abschließende Aufzählung lässt erahnen, welch mannigfaltige Auswahlmöglichkeiten zur Differenzierung und zur exakten Festlegung des erfindungsgemäßen Verfahrens möglich sind. Beispielsweise ist bei einem Getränkewunsch mit einer glatten und geschmeidigen Textur ein höherer Ölgehalt der Kaffeebohnen erforderlich, sodass in diesem Fall beispielsweise Arabica Bohnen zum Einsatz kommen können. Wünscht der Benutzer hingegen eine dicke und stabile Crema auf seinem Espresso, so kann die Rechnereinrichtung 2 hierfür beispielsweise Robusta Kaffeebohnen mit einem niedrigeren Ölgehalt zwischen 10 und 12 % auswählen.

Die Ausführung des erfindungsgemäßen Verfahrens erfolgt bevorzugt mit einem Computerprogrammprodukt, welches Befehle umfasst, welche bei der Ausführung des Computerprogrammprodukts durch den Kaffeeautomaten 1 bzw. eine Rechnereinrichtung 2, diesen/diese veranlassen, das Verfahren auszuführen. Das Computerprogrammprodukt kann in einem nichtflüchtigen Speicher 3 im Kaffeeautomaten 1 abgespeichert oder in einer Cloud hinterlegt sein.

Mit dem erfindungsmäßen Verfahren und dem erfindungsgemäßen Kaffeeautomaten 1 kann erstmals auch einem unerfahrenen bzw. ungeübten Benutzer eine für seine Geschmacksbedürfnisse optimale Kaffeesorte problemlos angeboten werden, wodurch eine erhebliche Steigerung des Komforts für den Benutzer und dessen Geschmackserlebnis erreichbar sind.

### Bezugszeichen

- 1: Kaffeeautomat
- 2: Rechnereinrichtung
- 3: Speicher
- 4: WLAN-Modul
- 5: Display

## Patentansprüche

1. Verfahren zum Betreiben eines Kaffeeautomaten (1), bei dem
- Kaffeegetränkewünsche eines Benutzers bei der Benutzung des Kaffeeautomaten (1) sowie hierfür hinterlegte oder vom Benutzer vorgenommenen Einstellungen erfasst und an eine Rechnereinrichtung (2) übermittelt werden,
- die Rechnereinrichtung (2) die Kaffeegetränkewünsche und die hierfür hinterlegten oder vom Benutzer vorgenommenen Einstellungen analysiert und daraus mit den Kaffeegetränkewünschen und hinterlegten oder vom Benutzer vorgenommenen Einstellungen korrespondierende Kaffeeeigenschaften ermittelt,
- die Rechnereinrichtung (2) die ermittelten Kaffeeeigenschaften mit für unterschiedliche Kaffeesorten hinterlegten Kaffeeeigenschaften vergleicht,
- die Rechnereinrichtung (2) eine Kaffeesorte auswählt, bei welcher die ermittelten Kaffeeeigenschaften und die hinterlegten Kaffeeeigenschaften eine größtmögliche Übereinstimmung aufweisen,
- die Rechnereinrichtung (2) dem Benutzer bei einem nachfolgenden Getränkewunsch die für diesen Getränkewunsch ausgewählte Kaffeesorte vorschlägt.

2. Verfahren nach Anspruch 1, **dadurch gekennzeichnet, dass** die Rechnereinrichtung (2) für die ausgewählte und vorgeschlagene Kaffeesorte eine Verkaufsstelle empfiehlt.

3. Verfahren nach Anspruch 2, **dadurch gekennzeichnet, dass** der Benutzer einen Radius um den Kaffeeautomaten (1) und/oder bestimmte Regionen festlegt, in welchem/welchen die Verkaufsstelle für die ausgewählte und vorgeschlagene Kaffeesorte liegen soll.

4. Verfahren nach einem der Ansprüche 2 oder 3, **dadurch gekennzeichnet, dass** der Benutzer Städte festlegt, in welchen die Verkaufsstelle für die ausgewählte und vorgeschlagene Kaffeesorte liegen soll.

5. Verfahren nach einem der Ansprüche 1 bis 4, **dadurch gekennzeichnet, dass** von der Rechnereinrichtung (2) zumindest eine der nachfolgenden Kaffeeeigenschaften verarbeitet, Röstgrad, Säuregehalt, Anbaugebiet, Preis, Nachhaltigkeit, Koffeingehalt, Ölgehalt, etc.

6. Verfahren nach einem der vorhergehenden Ansprüche, **dadurch gekennzeichnet, dass** die Rechnereinrichtung (2) dem Benutzer über ein WLAN-Modul (4) einen online Shop für die ausgewählte und vorgeschlagene Kaffeesorte empfiehlt.

7. Kaffeeautomat (1) mit einem Display (5) bzw. einer Eingabeeinrichtung zum Eingeben von Kaffeegetränkewünschen und/oder zum Vornehmen von Einstellungen und einer Rechnereinrichtung (2) zur Durchführung des Verfahrens nach einem der vorhergehenden Ansprüche.

8. Kaffeeautomat nach Anspruch 7, **dadurch gekennzeichnet, dass** der Kaffeeautomat (1) ein mit der Rechnereinrichtung (2) kommunizierend verbundenes WLAN-Modul (4) aufweist.

9. Computerprogrammprodukt, umfassend Befehle, welche bei Ausführung des Computerprogrammprodukts durch einen Kaffeeautomaten (1) dieses veranlassen, das Verfahren nach einem der Ansprüche 1 bis 6 auszuführen.
